(19) Europäisches Patentamt

European Patent Office

Office européen des brevets

(11) **EP 1 272 540 B1**

(12) **EUROPÄISCHE PATENTSCHRIFT**

(45) Veröffentlichungstag und Bekanntmachung des Hinweises auf die Patenterteilung:
**31.05.2006 Patentblatt 2006/22**

(21) Anmeldenummer: **01921294.3**

(22) Anmeldetag: **01.03.2001**

(51) Int Cl.:
**C08F 265/06** (2006.01)     **C09D 151/00** (2006.01)
**C09J 151/00** (2006.01)

(86) Internationale Anmeldenummer:
**PCT/EP2001/002280**

(87) Internationale Veröffentlichungsnummer:
**WO 2001/064765 (07.09.2001 Gazette 2001/36)**

(54) **WÄSSRIGE (METH)ACRYLATCOPOLYMERISAT-DISPERSIONEN, VERFAHREN ZU IHRER HERSTELLUNG UND IHRE VERWENDUNG**

AQUEOUS (METH)ACRYLATE COPOLYMER DISPERSIONS, METHOD FOR PRODUCING THE SAME, AND THE USE THEREOF

DISPERSIONS AQUEUSES DE COPOLYMERE DE (METH)ACRYLATE, PROCEDE DE PREPARATION ET D'UTILISATION DESDITES DISPERSIONS

(84) Benannte Vertragsstaaten:
**AT BE CH CY DE DK ES FI FR GB GR IE IT LI LU MC NL PT SE TR**

(30) Priorität: **03.03.2000 DE 10010405**

(43) Veröffentlichungstag der Anmeldung:
**08.01.2003 Patentblatt 2003/02**

(73) Patentinhaber: **BASF Coatings Aktiengesellschaft 48165 Münster (DE)**

(72) Erfinder:
• **LÖCKEN, Wilma**
  **45721 Haltern (DE)**
• **RINK, Heinz-Peter**
  **48153 Münster (DE)**
• **HEIMEIER, Ursula**
  **48324 Sendenhorst (DE)**

(74) Vertreter: **Fitzner, Uwe et al**
**Dres. Fitzner & Münch**
**Hauser Ring 10**
**40878 Ratingen (DE)**

(56) Entgegenhaltungen:
**EP-A- 0 386 325        EP-A- 0 575 931**
**EP-A- 0 816 402        WO-A-98/33831**

# EP 1 272 540 B1

## Beschreibung

Die vorliegende Erfindung betrifft ein Verfahren zur Herstellung wäßriger (Meth)Acrylatcopolymerisat-Dispersionen.

In EP 0 816 402, WO 98/33831, EP 0 386 325 sind Verfahren beschrieben, bei denen Monomere mittels öllöslicher, freie Radikale liefernder Initiatoren in wäßrig/organischer Lösung (co)polymerisiert werden.

Hierbei ist Aufgabe der EP 0816402 wäßrige Polymere und Polymermischungen zu entwickeln, speziell auch für *Papier und Holabeschichtungen,* die vor allem frei sind von niedermolekularen Tensiden.

Die WO 98/33831 betrifft "PVC-Paints", d.h. Anstrichfarben (Titel). Die in den Beispielen verwendeten Polymere enthalten keine Vernetzer und tragen keine für die Vernetzung geeigneten funktionellen Gruppen tragen (geringe Mengen Carboxylgruppen sind zwar vorhanden, jedoch nur in Mengen, die zur Dispergierung ausreichen), so daß die resultierenden Beschichtungen keine Lacke mit Automobilqualität darstellen können.

Die EP 0386325 betrifft ausschließlich Klebstoffe. Ferner werden in D3 keine Vernetzer offenbart, so daß die resultierenden Beschichtungen keine Lacke mit Automobilqualität darstellen können.

Wäßrige (Meth)Acrylatcopolymerisat-Dispersionen, die hergestellt werden, indem man

(1) in einer ersten Stufe Monomere (a), die die Wasserlöslichkeit oder - dispergierbarkeit der hiermit hergestellten Copolymerisate bewirken, und Monomere (b), die im wesentlichen hydrophob sind, in Wasser oder in wässrig/organischer Lösung unter Verwendung öllöslicher und wasserlöslicher, freie Radikale liefernder Initiatoren der Emulsionspolymerisation unterwirft und das resultierende Copolymerisat neutralisiert und

(2) in einer zweiten Stufe im wesentlichen Monomere (b) in Gegenwart der in der ersten Stufe hergestellten Dispersion in Emulsion copolymerisiert,

sind aus der deutschen Offenlegungsschrift DE 196 25 773 A 1 und der internationalen Patentanmeldung WO 98/49205 bekannt. Die bekannten wäßrigen (Meth)Acrylatcopolymerisat-Dispersionen dienen unter anderem der Herstellung von in Wasser redispergierbaren Polymerpulvern oder direkt zur Verwendung als Bindemittel in Beschichtungsstoffen, Klebstoffen, Pressmassen und Formkörpern. Sie weisen aber den Nachteil auf, daß sie nicht immer zuverlässig mit den niedrigen Molekulargewichten, wie sie auf dem Gebiet der Beschichtungsstoffe von Vorteil sind, hergestellt werden können. Bindemittel eines zu hohen Molekulargewichts können nämlich deutlich sichtbare Störungen in Lackierungen hervorrufen. Dies erweist sich insbesondere auf dem technologisch und ästhetisch besonders anspruchsvollen Gebiet der Kfzlackierung, insbesondere der Automobilserienlackierung, als schwerwiegender Nachteil, weil hier Störungen in der Lackierung besonders unangenehm ins Auge springen und daher von den Kraftfahrzeugherstellern und ihren Kunden überhaupt nicht akzeptiert werden.

Aufgabe der vorliegenden Erfindung ist es, ein Verfahren zur Herstellung von (Meth)Acrylatcopolymerisat-Dispersionen bereitzustellen, die die Nachteile des Standes der Technik nicht mehr länger aufweisen, sondern (Meth)Acrylatcopolymerisate eines vorteilhaft niedrigen Molekulargewichts enthalten und die die Herstellung von Beschichtungsstoffen, Klebstoffen und Dichtungsmassen gestatten, die allen Ansprüchen der Praxis genügen.

Insbesondere sollen die neuen Beschichtungsstoffe optisch einwandfreie und von Störungen freie Lackierungen liefern.

Demgemäß wurde ein Verfahren zur Herstellung von wäßrigen (Meth)Acrylatcopolymerisat-Dispersionen gefunden, bei dem man

(I) mindestens ein Monomer (a), das mindestens eine hydrophile funktionelle Gruppe enthält, die die Wasserlöslichkeit oder -dispergierbarkeit des (Meth)Acrylatcopolymerisats bewirkt, in wässrig/organischer Lösung unter Verwendung mindestens eines öllöslichen, freie Radikale liefernden Initiators (co)polymerisiert,

(II) das resultierende (Co)Polymerisat I gegebenenfalls partiell oder vollständig neutralisiert,

(III) die resultierende Lösung des gegebenenfalls (partiell) neutralisierten (Co)Polymerisats I in Wasser dispergiert und

(IV) in Gegenwart der resultierenden Dispersion III mindestens ein Monomer (b) unter Verwendung öllöslicher, freie Radikale liefernder Initiatoren copolymerisiert und/oder pfropfrnischpolymerisiert, wobei das Monomer oder die Monomeren (b)

- mindestens eine hydrophile funktionelle Gruppe, die keine wesentliche Wasserlöslichkeit oder -dispergierbarkeit des (Meth)Acrylatcopolymerisats bewirkt, oder mindestens eine hydrophobe Gruppe enthält oder enthalten und

2

- nach Art und Menge so ausgewählt wird oder werden, daß das resultierende (Meth)Acrylatcopolymerisat in Wasser löslich oder dispergierbar ist.

Im folgenden werden die neuen wäßrigen (Meth)Acrylatcopolymerisat-Dispersionen der Kürze halber als "erfindungsgemäß hergestellte Dispersionen" bezeichnet.

Weitere erfindungsgemäße Gegenstände gehen aus der Beschreibung hervor.

Die erfindungsgemäß hergestellten Dispersionen weisen einen Festkörpergehalt auf, der sehr breit variiert werden kann, was einer ihrer besonderen Vorteile ist. Vorzugsweise liegt der Festkörpergehalt, jeweils bezogen auf die erfindungsgemäße Dispersion, bei 10 bis 70, bevorzugt 15 bis 65, besonders bevorzugt 20 bis 60, ganz besonders bevorzugt 25 bis 55 und insbesondere 30 bis 50 Gew.-%. Vorzugsweise liegt der pH-Wert der erfindungsgemäßen Dispersionen bei 7,0 bis 9,0.

Vorzugsweise weisen die in den erfindungsgemäß hergestellten Dispersionen vorliegenden wasserlöslichen oder -dispergierbaren (Meth)Acrylatcopolymerisate Hydroxylzahlen von 30 bis 200, bevorzugt 40 bis 190, besonders bevorzugt 50 bis 180, ganz besonders bevorzugt 60 bis 170, ganz besonders bevorzugt 70 bis 160 und insbesondere 80 bis 150 mg KOH/g auf. Dienen die erfmdungsgemäßen Dispersionen der Herstellung physikalisch härtender erfindungsgemäßer Beschichtungsstoffe, Klebstoffe und Dichtungsmassen können auch Hydroxylzahlen kleiner als 30 mg KOH/g angewandt werden.

Die erfindungsgemäß zu verwendenden (Meth)Acrylatcopolymerisate enthalten hydrophile funktionelle Gruppen, die sie wasserlöslich oder -dispergierbar machen und die durch die nachstehend beschriebenen Monomeren (a) eingeführt werden. Der Gehalt an hydrophilen funktionellen Gruppen kann ebenfalls sehr breit variieren und richtet sich nach den Erfordernissen des Einzelfalls. Nach unten ist er lediglich dadurch begrenzt, daß so viele hydrophile funktionelle Gruppen angewandt werden müssen, daß die erfindungsgemäß zu verwendenden (Meth)Acrylatcopolymerisate wasserlöslich oder wasserdispergierbar sind. Nach oben ist er dadurch begrenzt, daß die vorhandenen hydrophilen funktionellen Gruppen nicht die Wasserbeständigkeit der aus den erfindungsgemäßen Beschichtungsstoffen, Klebstoffen und Dichtungsmassen hergestellten Beschichtungen, Klebschichten und Dichtungen nicht verringern dürfen. Vorzugsweise werden die hydrophilen funktionellen Gruppen in einer Menge von 9 bis 200 mÄqu. /100g (Meth)Acrylatcopolymerisat angewandt. Werden Säuregruppen oder Aminogruppen als hydrophile funktionelle Gruppen angewandt, entspricht dies Säurezahlen oder Aminzahlen von 5 bis 112 mg KOH/g. Vorzugsweise werden Säurezahlen oder Aminzahlen von 10 bis 100, besonders bevorzugt 12 bis 80, besonders bevorzugt 15 bis 70, ganz besonders bevorzugt 18 bis 60 und insbesondere 20 bis 50 mg KOH/g verwendet.

Die Glasübergangstemperatur der erfindungsgemäß zu verwendenden (Meth)Acrylatcopolymerisate kann sehr breit variieren und richtet sich in erster Linie nach dem Verwendungszweck der erfindungsgemäß hergestellten Dispersionen. Der Fachmann kann die für den jeweiligen Verwendungszweck optimalen Glasübergangstemperaturen über die stoffliche Zusammensetzung, d. h. die Art und Menge der nachstehend im Detail beschriebenen Monomeren, einstellen, wobei er die Glasübergangstemperaturen nach der Formel von Fox näherungsweise berechnen kann:

$$1/Tg = \sum_{n=1}^{n=x} W_n/Tg_n; \quad \sum_n W_n = 1 \qquad (I)$$

Tg = Glasübergangstemperatur des Polyacrylatharzes
$W_n$ = Gewichtsanteil des n-ten Monomers
$Tg_n$ = Glasübergangstemperatur des Homopolymers aus dem n-ten Monomer
x = Anzahl der verschiedenen Monomeren

Vorzugsweise liegen die Glasübergangstemperaturen zwischen -30 und 180, bevorzugt -20 und 160, besonders bevorzugt -10 und 140, ganz besonders bevorzugt 0 und 120 und insbesondere 10 und 100°C.

Die zahlenmittleren Molekulargewichte der erfindungsgemäß zu verwendenden (Meth)Acrylatcopolymerisate können breit variieren. Vorzugsweise werden vergleichsweise niedere zahlenmittlere Molekulargewichte, bevorzugt unter 15.000 Dalton, ganz besonders bevorzugt 1.500 bis 13.000 Dalton und insbesondere 2.500 bis 10.000 Dalton, eingestellt. Vorzugsweise weisen sie eine Uneinheitlichkeit des Molekulargewichts von 2,5 bis 15, insbesondere 3,0 bis 12 auf.

Die erfindungsgemäß hergestellten Dispersionen sind herstellbar, indem man in einer ersten Stufe mindestens ein Monomer (a), das mindestens eine hydrophile funktionelle Gruppe enthält, die die Wasserlöslichkeit oder -dispergierbarkeit des (Meth)Acrylatcopolymerisats bewirkt, in wässrig/organischer Lösung unter Verwendung mindestens eines öllöslichen, freie Radikale liefernden Initiators (co)polymerisiert.

Im Rahmen der vorliegenden Erfindung ist unter der Eigenschaft hydrophil die konstitutionelle Eigenschaft eines Moleküls oder einer funktionellen Gruppe zu verstehen, in die wäßrige Phase einzudringen oder darin zu verbleiben. Demgemäß ist im Rahmen der vorliegenden Erfindung unter der Eigenschaft hydrophob die konstitutionelle Eigenschaft eines Moleküls oder einer funktionellen Gruppe zu verstehen, sich gegenüber Wasser exophil zu verhalten, d. h., sie zeigen die Tendenz, in Wasser nicht einzudringen oder die wäßrige Phase zu verlassen. Ergänzend wird auf Römpp Lexikon Lacke und Druckfarben, Georg Thieme Verlag, Stuttgart, New York, 1998, »Hydrophilie«, »Hydrophobie«, Seiten 294 und 295, verwiesen.

Beispiele gut geeigneter erfindungsgemäß zu verwendender hydrophiler funktioneller Gruppen sind

- Säuregruppen wie Carboxylgruppen, Sulfonsäuregruppen, Phosphorsäuregruppen oder Phosphonsäuregruppen, bevorzugt Carboxylgruppen und Sulfonsäuregruppen, insbesondere Carboxylgruppen,

- Aminogruppen wie primäre, sekundäre oder tertiäre Aminogruppen, quaternäre Ammoniumgruppen oder Phosphoniumgruppen oder ternäre Sulfoniumgruppen oder

- Polyethergruppen der allgemeinen Formel $R^1$-(-O-(CHR$^2$)$_o$-)$_p$-, worin der Substituent $R^2$ = Wasserstoff oder ein niedriger, gegebenenfalls substituierter Alkylrest ist, der Index o = 2 bis 6, bevorzugt 3 bis 4, und der Index p = 2 bis 100, bevorzugt 5 bis 50, ist und worin der Rest $R^1$ für einen niedrigen Alkylrest, insbesondere für Methyl, Ethyl, Propyl, Isopropyl, n-Butyl, Isobutyl oder tert.-Butyl, steht. Besonders gut geeignet sind Methyl-Ethyl- oder Propyl-poly(ethylenglykol), insbesondere Methyl-poly(ethylenglykol).

Beispiele geeigneter erfmdungsgemäß zu verwendender Monomere (a) sind die Monomeren (a1), (a2) und (a3):

Beispiele geeigneter erfindungsgemäß zu verwendender Monomere (a1) sind Acrylsäure, Methacrylsäure, Ethacrylsäure, Crotonsäure, Maleinsäure und deren Halbester, Fumarsäure und deren Halbester oder Itaconsäure und deren Halbester; olefinisch ungesättigte Sulfonsäuren wie Vinylbenzoesäure (alle Isomere), alpha-Methylvinylbenzoesäure (alle Isomere), oder p-Vinylbenzsolsulfonsäure oder Phosphonsäuren oder deren Teilester oder Maleinsäuremono (meth)acryloyloxyethylester, Bernsteinsäwemono(meth)acryloyloxyethylester oder Phthalsäuremono(meth)acryloyloxyethylester. Weitere Beispiele säuregruppenhaltiger Monomere (a1) sind aus der Offenlegungsschrift DE 196 25 773 A 1, Spalte 2, Zeile 58, bis Spalte 3, Zeile 8, oder aus der internationalen Patentanmeldung WO 98/49205, Seite 3, Zeilen 23 bis 34, bekannt, wobei die Monomeren (a1) so ausgewählt werden, daß das Eigenschaftsprofil der resultierenden (Co)Polymerisate von dem oder den (Meth)Acrylat-Monomeren bestimmt wird.

Beispiele geeigneter erfmdungsgemäß zu verwendender Monomere (a2) sind N,N-Diethylamino-alpha-rnethylstyrol (alle Isomere), N,N-Diethylaminostyrol (alle Isomere), Allylamin, Crotylamin, 2-Amino- oder 2-N-Methyl-, 2-N,N-Dimethyl-, 2-N-Ethyl-, 2-N,N-Diethyl-, 2-N-Propyl-, 2-N,N-Dipropyl-, 2-N-Butyl-, 2-N,N-Dibutyl-, 2-N-Cyclohexyl- oder 2-N,N-Cyclohexyl-methyl-amino- oder 2-N,N,N,N-Tetramethylammonium- oder 2-N,N-Dimethyl-N,N-diethylammonium-, 2-Tetramethylphosphonium- oder 2-Triethylsulfoniumethylacrylat, -ethylmethacrylat, -propylacrylat oder -propylmethacrylat oder 3-Amino- oder 3-N-Methyl-, 3-N,N-Dimethyl-, 3-N-Ethyl-, 3-N,N-Diethyl-, 3-N-Propyl-, 3-N,N-Dipropyl-, 3-N-Butyl-, 3-N,N-Dibutyl-, 3-N-Cyclohexyl- oder 3-N,N-Cyclohexyl-methyl-amino- oder 3-N,N,N,N-Tetramethylammonium- oder 3-N,N-Dimethyl-N,N-diethylammonium-, 3-Tetramethylphosphonium- oder 3-Triethylsulfonium-propylacrylat oder -propylmethacrylat, wobei die Monomeren (a2) vorzugsweise so ausgewählt werden, daß das Eigenschaftsprofil der resultierenden (Co)Polymerisate von dem oder den (Meth)Acrylat-Monomeren bestimmt wird.

Beispiele geeigneter erfindungsgemäß zu verwendender Monomere (a3) sind Methyl- Ethyl- oder Propyl-poly (ethylenglykol)-acrylat oder -methacrylat, insbesondere Methyl-poly(ethylenglykol)-acrylat oder -methacrylat. Weitere Beispiele geeigneter Monomere (a) dieser Art sind aus der Offenlegungsschrift DE 196 25 773 A 1, Spalte 3, Zeile 65, bis Spalte 4, Zeile 20, bekannt.

Die Monomeren (a1) oder (a2) können gemeinsam mit den Monomeren (a3) verwendet werden. Die gemeinsame Verwendung der Monomeren (a1) und (a2) empfiehlt sich nur in Ausnahmefällen, weil hierbei die Gefahr der Bildung unlöslicher Polyelektrolytkomplexe besteht. Im Rahmen der vorliegenden Erfindung weisen die Monomeren (a1) Vorteile auf und werden daher erfindungsgemäß bevorzugt verwendet. Von diesen Monomeren (a1) sind die carboxylgruppenhaltigen, insbesondere Acrylsäure und Methacrylsäure, besonders vorteilhaft werden daher erfindungsgemäß ganz besonders bevorzugt verwendet.

Erfindungsgemäß kann das Monomer (a) oder können die Monomeren (a) mit mindestens einem Monomeren (b), das mindestens eine hydrophile funktionelle Gruppe, die keine wesentliche Wasserlöslichkeit oder -dispergierbarkeit des (Meth)Acrylatcopolymerisats bewirkt, oder mindestens eine hydrophobe Gruppe enthält, copolymerisiert werden.

Beispiele geeigneter hydrophiler funktioneller Gruppen, die keine wesentliche Wasserlöslichkeit oder -dispergierbarkeit hervorrufen, sind Hydroxylgruppen, Amidgruppen, Carbamatgruppen, Epoxidgruppen oder Ureidogruppen.

Beispiele geeigneter hydrophober Gruppen sind Alkylgruppen oder Cycloalkylgruppen.

Erimdungsgemäß kommen hierfür alle üblichen und bekannten, von den Monomeren (a) verschiedenen, ethylenisch ungesättigten Monomere in Betracht. Diese werden nach Art und Menge so ausgewählt, daß das Eigenschaftsprofil des resultierenden Copolymerisats im wesentlichen von den (Meth)Acrylaten bestimmt wird und das erfindungsgemäß zu verwendende (Meth)Acrylatcopolymerisat wasserlöslich oder -dispergierbar bleibt.

Beispiele geeigneter Monomere (b) sind:

b1) im wesentlichen säuregruppenfreie (Meth)acrylsäureester wie (Meth)Acrylsäurealkyl- oder -cycloalkylester mit bis zu 20 Kohlenstoffatomen im Alkylrest, insbesondere Methyl-, Ethyl-, Propyl-, n-Butyl-, sec.-Butyl-, tert.-Butyl-, Hexyl-, Ethylhexyl-, Stearyl- und Laurylacrylat oder methacrylat; cycloaliphatische (Meth)acrylsäureester, insbesondere Cyclohexyl-, Isobornyl-, Dicyclopentadienyl-, Octahydro-4,7-methano-1H-inden-methanol- oder tert.-Butylcyclohexyl(meth)acrylat; diese können in untergeordneten Mengen höherfunktionelle (Meth)Acrylsäurealkyl- oder -cycloalkylester wie Ethylengylkol-, Propylenglykol-, Diethylenglykol-, Dipropylenglykol-, Butylenglykol-, Pentan-1,5-diol-, Hexan-1,6-diol-, Octahydro-4,7-methano-1H-indendimethanol- oder Cyclohexan-1,2-, -1,3- oder -1,4-diol-di(meth)acrylat; Trimethylolpropan-di- oder -tri(meth)acrylat; oder Pentaerythrit-di-, -tri- oder -tetra(meth)acrylat enthalten. Im Rahmen der vorliegenden Erfindung sind hierbei unter untergeordneten Mengen an höherfunktionellen Monomeren solche Mengen zu verstehen, welche nicht zur Vernetzung oder Gelierung der Copolymerisate führen;

b2) im wesentlichen säuregruppenfreie Hydroxyalkylester der Acrylsäure, Methacrylsäure oder einer anderen alpha,beta-olefinisch ungesättigten Carbonsäure, die sich von einem Alkylenglykol ableiten, das mit der Säure verestert ist, oder die durch Umsetzung der alpha,beta-olefinisch ungesättigten Carbonsäure mit einem Alkylenoxid erhältlich sind, insbesondere Hydroxyalkylester der Acrylsäure, Methacrylsäure, Ethacrylsäure, Crotonsäure, Maleinsäure, Fumarsäure oder Itaconsäure, in denen die Hydroxyalkylgruppe bis zu 20 Kohlenstoffatome enthält, wie 2-Hydroxyethyl-, 2-Hydroxypropyl-, 3-Hydroxypropyl-, 3-Hydroxybutyl-, 4-Hydroxybutylacrylat, -methacrylat, -ethacrylat, -crotonat, -maleinat, -fumarat oder -itaconat; oder Hydroxycycloalkylester wie 1,4-Bis(hydroxymethyl)cyclohexan-, Octahydro-4,7-methano-1H-indendimethanol- oder Methylpropandiolmonoacrylat, -monomethacrylat, -monoethacrylat, -monocrotonat, -monomaleinat, -monofumarat oder -monoitaconat; oder Umsetzungsprodukte aus cyclischen Estern, wie z.B. epsilon-Caprolacton und diesen Hydroxyalkyl- oder -cycloalkylestem; oder olefinisch ungesättigte Alkohole wie Allylalkohol oder Polyole wie Trimethylolpropanmono- oder diallylether oder Pentaerythritmono-, -di- oder -triallylether (hinsichtlich dieser höherfunktionellen Monomeren (b2) gilt das für die höherfunktionellen Monomeren (b1) Gesagte sinngemäß);

b3) Vinylester von in alpha-Stellung verzweigten Monocarbonsäuren mit 5 bis 18 Kohlenstoffatomen im Molekül. Die verzweigten Monocarbonsäuren können erhalten werden durch Umsetzung von Ameisensäure oder Kohlenmonoxid und Wasser mit Olefinen in Anwesenheit eines flüssigen, stark sauren Katalysators; die Olefine können Crack-Produkte von paraffmischen Kohlenwasserstoffen, wie Mineralölfraktionen, sein und können sowohl verzweigte wie geradkettige acyclische und/oder cycloaliphatische Olefine enthalten. Bei der Umsetzung solcher Olefine mit Ameisensäure bzw. mit Kohlenmonoxid und Wasser entsteht ein Gemisch aus Carbonsäuren, bei denen die Carboxylgruppen vorwiegend an einem quatemären Kohlenstoffatom sitzen. Andere olefinische Ausgangsstoffe sind z.B. Propylentrimer, Propylentetramer und Diisobutylen. Die Vinylester (a4) können aber auch auf an sich bekannte Weise aus den Säuren hergestellt werden, z.B. indem man die Säure mit Acetylen reagieren läßt. Besonders bevorzugt werden - wegen der guten Verfügbarkeit - Vinylester von gesättigten aliphatischen Monocarbonsäuren mit 9 bis 11 C-Atomen, die am alpha-C-Atom verzweigt sind, insbesondere aber Versatic®-Säuren (vgl. Römpp Lexikon Lacke und Druckfarben, Georg Thieme Verlag, Stuttgart, New York, 1998, »Versatic®-Säuren « Seiten 605 und 606), eingesetzt.

b4) Umsetzungsprodukte aus Acrylsäure und/oder Methacrylsäure mit dem Glycidylester einer in alpha-Stellung verzweigten Monocarbonsäure mit 5 bis 18 C-Atomen je Molekül, insbesondere einer Versatico-Säure, oder anstelle des. Umsetzungsproduktes eine äquivalenten Menge Acryl- und/oder Methacrylsäure, die dann während oder nach der Polymerisationsreaktion mit dem Glycidylester einer in alpha-Stellung verzweigten Monocarbonsäure mit 5 bis 18 C-Atomen je Molekül, insbesondere einer Versatic®-Säure, umgesetzt wird.

b5) Cyclische und/oder acyclische Olefine wie Ethylen, Propylen, But-1-en, Pent-1-en, Hex-1-en, Cyclohexen, Cyclopenten, Norbonen, Butadien, Isopren, Cylopentadien und/oder Dicyclopentadien.

b6) amidogruppenhaltige Monomere wie (Meth)Acrylsäureamide wie (Meth)Acrylsäureamid, N-Methyl-, N,N-Dimethyl-, N-Ethyl-, N,N-Diethyl-, N-Propyl-, N,N-Dipropyl-, N-Butyl-, N,N-Dibutyl-, N-Cyclohexyl-, N,N-Cyclohexyl-methyl- und/oder N-Methylol-, N,N-Dimethylol-, N-Methoxymethyl-, N,N-Di(methoxymethyl)-, N-Ethoxymethyl- und/oder N,N-Di(ethoxyethyl)-(meth)acrylsäureamid; carbamatgruppenhaltige Monomere wie (Meth)Acryloyloxyethylcarbamat oder (Meth)Acryloyloxypropylcarbamat; oder harnstofigruppenhaltige Monomere wie Ureidoacrylat oder -methacrylat;

b7) Epoxidgruppen enthaltende Monomere wie der Glycidylester der Acrylsäure, Methacrylsäure, Ethacrylsäure, Crotonsäure, Maleinsäure, Fumarsäure und/oder Itaconsäure;

b8) Vinylaromatische Kohlenwasserstoffe wie Styrol, Vinyltoluol, Diphenylethylen oder alpha-Alkylstyrole, insbesondere alpha-Methylstyrol;

b9) Nitrile wie Acrylnitril und/oder Methacrylnitril.

b10) Vinylverbindungen, insbesondere Vinyl- und/oder Vinylidendihalogenide wie Vinylehlorid, Vinylfluorid, Vinylidendichlorid oder Vinylidendifluorid; N-Vinylamide wie Vinyl-N-methylformamid, N-Vinylcaprolactam oder N-Vinylpyrrolidon; 1-Vinylimidazol; Vinylether wie Ethylvinylether, n-Propylvinylether, Isopropylvinylether, n-Butylvinylether, Isobutylvinylether und/oder Vinylcyclohexylether; und/oder Vinylester wie Vinylacetat, Vinylpropionat, Vinylbutyrat, Vinylpivalat und/oder der Vinylester der 2-Methyl-2-ethylheptansäure.

b11) Allylverbindungen, insbesondere Allylether und -ester wie Allylmethyl-, -ethyl-, -propyl- oder -butylether oder Allylacetat, -propionat oder -butyrat.

b12) Polysiloxanmakromonomere, die ein zahlenmittleres Molekulargewicht Mn von 1.000 bis 40.000 und im Mittel 0,5 bis 2,5 ethylenisch ungesättigte Doppelbindungen pro Molekül aufweisen; insbesondere Polysiloxanmakromonomere, die ein zahlenmittleres Molekulargewicht Mn von 2.000 bis 20.000, besonders bevorzugt 2.500 bis 10.000 und insbesondere 3.000 bis 7.000 und im Mittel 0,5 bis 2,5, bevorzugt 0,5 bis 1,5, ethylenisch ungesättigte Doppelbindungen pro Molekül aufweisen, wie sie in der DE 38 07 571 A 1 auf den Seiten 5 bis 7, der DE 37 06 095 A 1 in den Spalten 3 bis 7, der EP 0 358 153 B 1 auf den Seiten 3 bis 6, in der US 4,754,014 A 1 in den Spalten 5 bis 9, in der DE 44 21 823 A 1 oder in der internationalen Patentanmeldung WO 92/22615 auf Seite 12, Zeile 18, bis Seite 18, Zeile 10, beschrieben sind; und/oder

b13) Acryloxysilan-enthaltende Vinylmonomere, herstellbar durch Umsetzung hydroxyfunktioneller Silane mit Epichlorhydrin und anschließender Umsetzung des Reaktionsproduktes mit (Meth)acrylsäure und/oder Hydroxyalkyl- und/oder -cycloalkylestern der (Meth)Acrylsäure (vgl. Monomere b2).

Die vorstehend beschriebenen Monomere (a) sowie gegebenenfalls (b) werden in wässrig/organischer Lösung (co)polymerisiert.

Die erfindungsgemäß zu verwendende wässrig/organische Lösung enthält Wasser und mindestens ein wasserlösliches organisches Lösemittel oder sie besteht hieraus. Beispiele geeigneter wasserlöslicher organischer Lösemittel sind niedermolekulare Alkohole oder Diole wie Methanol, Ethanol, Propanol, Isopropanol, n-Butanol, Ethylglykol oder Propylglykol, Ketone wie Aceton oder Methylethylketon oder Amide wie N-Methylpyrrolidon oder N-Dimethylformamid. Außer Wasser und den organischen Lösemitteln kann die Lösung noch Zusatzstoffe enthalten, wie sie üblicherweise bei der radikalischen Lösungspolymerisation verwendet werden, wie Molekulargewichtsregler wie beispielsweise Dodecylmercaptan. Die Lösung kann auch einen Teil der nachstehend beschriebenen Initiatoren oder einen Teil der erfindungsgemäß zu verwendenden Monomeren (a) oder gegebenenfalls (b), vorzugsweise 30 bis 50%, enthalten. Vorzugsweise liegt das Gewichtsverhältnis von organischem Lösemittel zu Wasser bei 99 : 1 bis 70 : 30. Erfindungsgemäß wird die Lösung als Vorlage für die (Co)Polymerisation verwendet.

Für die (Co)Polymerisation wird erfindungsgemäß mindestens ein öllöslicher, freie Radikale liefernder Initiator verwendet. Beispiele geeigneter Initiatoren dieser Art sind Dialkylperoxide, wie Di-tert.-Butylperoxid oder Dicumylperoxid; Hydroperoxide, wie Cumolhydroperoxid oder tert.- Butylhydroperoxid; Perester, wie tert.-Butylperbenzoat, tert.-Butylperpivalat, tert.-Butylper-3,5,5-trimethylhexanoat oder tert.-Butylper-2-ethylhexanoat; Peroxodicarbonate wie Bis(4-tert.-butylcyclohexyl)peroxydicarbonat; Azoinitiatoren, beispielsweise Azodinitrile wie Azobisisobutyronitril; oder C-C-spaltende Initiatoren wie Benzpinakolsilylether. Vorzugsweise werden sie in einer Menge von, jeweils bezogen auf die Monomeren (a) und gegebenenfalls (b), 0,1 bis 25, bevorzugt 0,2 bis 20, besonders bevorzugt 0,3 bis 15, ganz besonders bevorzugt 0,5 bis 13 und insbesondere 0,6 bis 12 Gew.-% verwendet.

Werden im ersten Verfahrensschritt Monomere (b) verwendet, ist es erfindungsgemäß von Vorteil, wenn das Monomer oder die Monomeren (a) einerseits und das Monomer oder die Monomeren (b) andererseits über getrennte Zuläufe zu der wässrig/organischen Lösung (Vorlage) zudosiert werden.

Methodisch gesehen weist die Lösungs(co)polymerisation keine Besonderheiten auf, sondern wird vorzugsweise bei Temperaturen von 50 bis 200, bevorzugt 55 bis 180, besonders bevorzugt 60 bis 160, besonders bevorzugt 65 bis 140, ganz besonders bevorzugt 70 bis 120 und insbesondere 75 bis 100°C gegebenenfalls unter Druck durchgeführt.

Als Reaktoren für die (Co)Polymerisationsverfahren kommen die üblichen und bekannten Rührkessel, Rührkesselkaskaden, Rohrreaktoren, Schlaufenreaktoren oder Taylorreaktoren, wie sie beispielsweise in den Patentschriften DE 1 071 241 B 1, DE 198 28 742 A 1 oder EP 0 498 583 A 1 oder in dem Artikel von K. Kataoka in Chemical Engineering Science, Band 50, Heft 9, 1995, Seiten 1409 bis 1416, beschrieben werden, in Betracht. Vorzugsweise wird die radikalische Copolymerisation in Rührkesseln oder Taylorreaktoren, durchgeführt, wobei die Taylorreaktoren so ausgelegt werden, daß auf der gesamten Reaktorlänge die Bedingungen der Taylorströmung erfüllt sind, selbst wenn sich die kinematische Viskosität des Reaktionsmediums aufgrund der Copolymerisation stark ändert, insbesondere ansteigt.

Das zahlenmittlere Molekulargewicht der im ersten Verfahrensschritt resultierenden (Co)Polymerisate kann sehr breit variieren und liegt vorzugsweise deutlich unter 10.000 Dalton. Bevorzugt liegt es bei 1.000 bis 9.000, besonders bevorzugt 1.500 bis 8.500, ganz besonders bevorzugt 2.000 bis 8.000 und insbesondere 2.500 bis 7.500 Dalton. Vorzugsweise ist die Uneinheitlichkeit vergleichsweise gering. Bevorzugt liegt sie unterhalb von 6,0, besonders bevorzugt 5,0, ganz besonders bevorzugt 4,0 und insbesondere 3,0.

Erfindungsgemäß wird bei Verwendung der vorstehend beschriebenen Monomeren (a1) oder der Monomeren (a2); die primäre, sekundäre oder tertiäre Aminogruppen enthalten, das resultierende (Co)Polymerisat im zweiten Verfahrensschritt partiell oder vollständig neutralisiert. Vorzugsweise wird partiell neutralisiert, wobei der Neutralisationsgrad insbesondere bei 70 bis 80 Mol-% liegt. Bei ausschließlicher Verwendung von Monomeren (a2), die quaternäre Ammoniumgruppen oder Phosphoniumgruppen oder ternäre Sulfoniumgruppen enthalten, oder von Monomeren (a3) erübrigt sich eine Neutralisation.

Beispiele geeigneter Neutralisationsmittel für Monomere (a1) sind Ammoniak, Ammoniumsalze, wie beispielsweise Ammoniumcarbonat oder Ammoniumhydrogencarbonat, sowie Amine, wie z.B. Trimethylamin, Triethylamin, Tributylamin, Dimethylanilin, Diethylanilin, Triphenylamin, Dimethylethanolamin, Diethylethanolamin, Methyldiethanolamin oder Triethanolamin.

Beispiele geeigneter Neutralisationsmittel für Monomere (a2) sind anorganische und organische Säuren wie Schwefelsäure, Salzsäure, Phosphorsäure, Ameisensäure, Essigsäure, Milchsäure, Dimethylolpropionsäure oder Zitronensäure.

Erfmdungsgemäß wird die vorstehend beschriebene Lösung des (Co)Polymerisats im dritten Verfahrensschritt in Wasser dispergiert. Vorzugsweise wird eine solche Menge an Wasser angewandt, daß die resultierende Dispersionen einen Festkörpergehalt von 10 bis 70, bevorzugt 15 bis 65, besonders bevorzugt 20 bis 60, die ganz besonders bevorzugt 25 bis 55 und insbesondere 30 bis 50 Gew.-% aufweist.

Erfindungsgemäß wird im vierten Verfahrensschritt mindestens eines der vorstehend beschriebenen Monomeren (b) in der Gegenwart der vorstehend beschriebenen Dispersion unter Verwendung der vorstehend beschriebenen, öllöslichen, freie Radikale liefernden Initiatoren (co)polymerisiert. Hierbei wird das Monomer (b) oder werden die Monomeren (b) nach Art und Menge so ausgewählt, daß das resultierende erfindungsgemäß zu verwendende (Meth) Acrylatcopolymerisat in Wasser löslich oder dispergierbar ist. Die Menge der Monomeren (b) richtet sich daher in erster Linie nach der Menge der im ersten Verfahrensschritt verwendeten Monomeren (a). So dürfen im vierten Verfahrenschritt nicht so viele Monomere (b) einpolymerisiert werden, daß die Menge der durch die Monomeren (a) eingebauten hydrophilen funktionellen Gruppen nicht mehr ausreicht, die erfindungsgemäß zu verwendenden (Meth)Acrylatcopolymerisate löslich oder dispergierbar zu machen. Der Fachmann kann daher die für den jeweiligen Einzelfall optimale Menge an Monomeren (b) anhand seines allgemeine Fachwissens gegebenenfalls unter Zuhilfenahme einfacher orientierender Versuche festlegen.

Die resultierenden erfindungsgemäß zu verwendenden (Meth)Acrylatcopolymerisate sind Pfropfmischpolymerisate und/oder (Co)Polymerisate, die im Gemisch mit den (Co)Polymerisaten des ersten Verfahrensschritts vorliegen. Entscheidend für den Anteil der Pfropfmischpolymerisate ist die Pfropfaktivität der im vierten Verfahrensschritt angewandten Monomeren (b) einerseits und die Anzahl mit der aktiven Pfropfzentren in den (Co)Polymerisaten. Unabhängig davon ob es sich bei den erfindungsgemäß zu verwendenden (Meth)Acrylatcopolymerisat oder um Pfropfmischpolymerisate oder (Co)Polymerisate handelt, ist es für die erfindungsgemäße Dispersion vor allem wesentlich, daß die Mengen an Monomeren (a) und Monomeren (b) im vorstehend beschriebenen Sinne ausgewogen sind.

Methodisch gesehen weist die(Co)Polymerisation und/oder Pfropfinischpolymerisation des vierten Verfahrenschritts keine Besonderheiten auf, sondern es werden die vorstehend beschriebenen Reaktionsbedingungen und Vorrichtungen verwendet.

Die erfindungsgemäß hergstellten Dispersionen dienen der Herstellung der erfindungsgemäßen Beschichtungsstoffe, Klebstoffe und Dichtungsmassen oder werden direkt als solche verwendet, was ein wesentlicher Vorteil der erfindungsgemäßen Dispersionen ist.

Bevorzugt werden sie als Beschichtungsstoffe, besonders bevorzugt als Füller, Unidecklacke, Wasserbasislacke und Klarlacke zur Herstellung ein- oder mehrschichtiger, farb- und/oder effektgebender Lackierungen auf grundierten und ungrundierten Substrate beispielsweise nach dem Naß-in-naß-Verfahren (vgl. die europäische Patentanmeldungen EP 0 089 497 A 1) verwendet. Für diese Verwendungszwecke kann den erfindungsgemäß hergestellten Primärdispersionen vor, während und/oder nach ihrer Herstellung noch mindestens ein übliches und bekanntes Lackadditiv in wirksamen Mengen zugesetzt werden. Hierbei werden vor oder während der Herstellung der erfindungsgemäßen Dispersionen nur solche Lackadditive zugesetzt, die die (Co)Polymerisation und/oder Pfropfmischpolymerisation nicht stören oder gar ganz inhibieren. Der Fachmann kann solche Lackadditive anhand seines allgemeinen Fachwissens identifizieren. Vorzugsweise werden die genannten Lackadditive nach der Herstellung der erfindungsgemäßen Dispersion zugesetzt.

Die Beschichtungsstoffe sind physikalisch härtend. Die physikalische Härtung erfordert i. a. keine Vernetzungsmittel, sondern erfolgt durch Lösemittel-Abgabe aus der applizierten Schicht. Dabei erfolgt die Verknüpfung über Schlaufenbildung zwischen den Polymermolekülen, deren Molekulargewicht sich dabei nicht ändert. Die physikalische Härtung kann auch durch die Koaleszenz von Bindemittelteilchen erfolgen, wie dies häufig bei Dispersionen der Fall ist (vgl. Römpp Lexikon Lacke und Druckfarben, Georg Thieme Verlag, Stuttgart, New York, 1998, Seiten 274 und 275: »Härtung«).

Die Beschichtungsstoffe können auch thermisch härtend sein. Hierbei sind sie selbstvernetzend oder fremdvernetzend. Im Rahmen der vorliegenden Erfindung bezeichnet der Begriff "selbstvernetzend" die Eigenschaft eines Bindemittels, mit sich selbst Vernetzungsreaktionen einzugehen. Voraussetzung hierfür ist, daß in den Bindemitteln bereits beide Arten von komplementären reaktiven funktionellen Gruppen enthalten sind, die für eine Vernetzung notwendig sind. Als fremdvernetzend werden dagegen solche Beschichtungsstoffe bezeichnet, worin die eine Art der komplementären reaktiven funktionellen Gruppen in dem Bindemittel, und die andere Art in einem Härter oder Vernetzungsmittel - sofern vorliegend mit verwendet - vorliegen. Ergänzend wird hierzu auf Römpp Lexikon Lacke und Druckfarben, Georg Thieme Verlag, Stuttgart, New York, 1998, »Härtung«, Seiten 274 bis 276, insbesondere Seite 275, unten, verwiesen.

Beispiele geeigneter komplementärer reaktiver funktioneller Gruppen für die thermische Härtung sind in der folgenden Übersicht zusammengestellt. In der Übersicht steht die Variable R für einen acyclischen oder cyclischen aliphatischen, einen aromatischen und/oder einen aromatisch-aliphatischen (araliphatischen) Rest; die Variablen R' und R" stehen für gleiche oder verschiedene aliphatische Reste oder sind miteinander zu einem aliphatischen oder heteroaliphatischen Ring verknüpft.

**Übersicht: Beispiele komplementärer funktioneller Gruppen**

| Bindemittel und Vernetzunssmittel | |
|---|---|
| **oder** | |
| **Vernetzunesmittel und Bindemittel** | |
| -SH | -C(O)-OH |
| -NH$_2$ | -C(O)-O-C(O)- |
| -OH | -NCO |
| -O-(CO)-NH-(CO)-NH$_2$ | -NH-C(O)-OR |
| -O-(CO)-NH$_2$ | -CH$_2$-OH |
| >NH | -CH$_2$-O-R |
| | -NH-CH$_2$-OH |
| | -NH-CH$_2$-O-R |
| | -N(-CH$_2$-O-R)$_2$ |
| | -NH-C(O)-CH(-C(O)OR)$_2$ |
| | -NH-C(O)-CH(-C(O)OR)(-C(O)-R) |
| | -NH-C(O)-NR'R" |
| | = Si(OR)$_2$ |
| | O |
| | -CH-CH$_2$ |
| -C(O)-OH | O |
| | -CH-CH$_2$ |
| | -C(O)-N(CH$_2$-CH$_2$-OH)$_2$ |

Die Auswahl der jeweiligen komplementären Gruppen richtet sich zum einen danach, daß sie bei der Lagerung und Applikationen des Beschichtungsstoffs keine unerwünschten Reaktionen eingehen und/oder gegebenenfalls eine zusätzliche Härtung mit aktinischer Strahlung nicht stören oder inhibieren dürfen, und zum anderen danach, in welchem Temperaturbereich die Vernetzung stattfinden soll.

Bei den thermisch härtbaren Beschichtungsstoffen können Vernetzungstemperaturen von 90 bis 200 °C angewandt werden. In diesen Fällen werden in den Bindemitteln vorzugsweise Thio-, Hydroxyl-, Methylol-, Methylolether, N-Methylol- N-Alkoxymethylamino-, Imino-, Carbamat-, Allophanat- und/oder Carboxylgruppen, insbesondere aber Carboxylgruppen oder Hydroxylgruppen, speziell Hydroxylgruppen, einerseits und in den Vernetzungsmitteln Anhydrid-, Carboxy-, Epoxy-, blockierte Isocyanat-, Urethan-, Methylol-, Methylolether-, N-Methylol- N-Alkoxymethylamino-, Siloxan-, Amino-, Hydroxy- und/oder beta-Hydroxyalkylamidgruppen, insbesondere aber blockierte Isocyanatgruppen oder Epoxygruppen, andererseits angewandt. Für die Herstellung selbstvernetzender Bindemittel werden vorzugsweise Methylol-, Methylolether, N-Methylol- oder N-Alkoxymethylaminogruppen eingesetzt.

Beispiele geeigneter Vernetzungsmittel sind Aminoplastharze, wie sie beispielsweise in Römpp Lexikon Lacke und Druckfarben, Georg Thieme Verlag, 1998, Seite 29, »Aminoharze«, dem Lehrbuch "Lackadditive" von Johan Bieleman, Wiley-VCH, Weinheim, New York, 1998, Seiten 242 ff., dem Buch "Paints, Coatings and Solvents", second completely revised edition, Edit. D. Stoye und W. Freitag, Wiley-VCH, Weinheim, New York, 1998, Seiten 80 ff., den Patentschriften US 4 710 542 A 1 oder EP-B-0 245 700 A 1 sowie in dem Artikel von B. Singh und Mitarbeiter "Carbamylmethylated Melamines, Novel Crosslinkers for the Coatings Industry", in Advanced Organic Coatings Science and Technology Series, 1991, Band 13, Seiten 193 bis 207, beschrieben werden, Carboxylgruppen enthaltende Verbindungen oder Harze, wie sie beispielsweise in der Patentschrift DE 196 52 813 A 1 beschrieben werden, Epoxidgruppen enthaltende Verbindungen oder Harze, wie sie beispielsweise in den Patentschriften EP 0 299 420 A 1, DE 22 14 650 B 1, DE 27 49 576 B 1, US 4,091,048 A 1 oder US 3,781,379 A 1 beschrieben werden, blockierte Polyisocyanate, wie sie beispielsweise in den Patentschriften US 4,444,954 A 1, DE 196 17 086 A 1, DE 196 31 269 A 1, EP 0 004 571 A 1 oder EP 0 582 051 A 1 beschrieben werden, und/oder Tris(alkoxycarbonylamino)-triazine, wie sie in den Patentschriften US 4,939,213 A 1, US 5,084,541 A 1, US 5,288,865 A 1 oder EP 0 604 922 A 1 beschrieben werden.

Es können indes auch Vernetzungstemperaturen von Raumtemperatur bis 90°C angewandt werden. In diesen Fällen enthalten die Bindemittel vorzugsweise Hydroxylgruppen und die Vernetzungsmittel unblockierte Isocyanatgruppen. Beispiele geeigneter Vernetzungsmittel sind daher Polyisocyanate, wie Isocyanurat-, Biuret-, Allophanat-, Iminooxadiazindon-, Urethan-, Harnstoff- und/oder Uretdiongruppen aufweisende Polyisocyanate. Urethangruppen aufweisende Polyisocyanate werden beispielsweise durch Umsetzung eines Teils der Isocyanatgruppen mit Polyolen, wie z.B. Trimethylolpropan und Glycerin, erhalten. Vorzugsweise werden aliphatische oder cycloaliphatische Polyisocyanate, insbesondere Hexamethylendiisocyanat, dimerisiertes und trimerisiertes Hexamethylendiisocyanat, Isophorondiisocyanat, Dicyclohexylrnethan-2,4'-düsocyanat, Dicyclohexylmethan-4,4'-diisocyanat, Diisocyanate, abgeleitet von Dimerfettsäuren, wie sie unter der Handelsbezeichnung DDI 1410 von der Firma Henkel vertrieben und in den Patentschriften WO 97/49745 und WO 97/49747 beschrieben werden insbesondere 2-Heptyl-3,4-bis(9-isocyanatononyl)-1-pentyl-cyclohexan; oder 1,2-, 1,4- oder 1,3-Bis(isocyanatomethyl)cyclohexan, 1,2-, 1,4- oder 1,3-Bis(2-isocyanatoeth-1-yl)cyclohexan, 1,3-Bis(3-isocyanatoprop-1-yl)cyclohexan oder 1,2-, 1,4- oder 1,3-Bis(4-isocyanatobut-1-yl)cyclohexan, 1,8-Diisocyanato-4-isocyanatomethyl-octan, 1,7-DÜsocyanato-4-isocyanatomethyl-heptan oder 1-Isocyanato-2-(3-isoeyanatopropyl)cyclohexan - oder Mischungen aus diesen Polyisocyanaten eingesetzt. Ganz besonders bevorzugt werden Gemische aus Uretdion- und/oder Isocyanuratgruppen und/oder Allophanatgruppen aufweisenden Polyisocyanaten auf Basis von Hexamethylendüsocyanat, wie sie durch katalytische Oligomerisierung von Hexamethylendüsocyanat unter Verwendung von geeigneten Katalysatoren entstehen, eingesetzt.

Die Beschichtungsstoffe sind des weiteren thermisch und mit aktinischer Strahlung härtbar, was von der Fachwelt auch als "Dual Cure" bezeichnet wird. Im Rahmen der vorliegenden Erfindung ist unter aktinischer Strahlung elektromagnetische Strahlung, wie sichtbares Licht, UV-Strahlung oder Röntgenstrahlung, insbesondere UV-Strahlung, und Korpuskularstrahlung wie Elektronenstrahlung zu verstehen.

Die Dual Cure-Beschichtungsstoffe enthalten mindestens einen Zusatzstoff wie Reaktiwerdünner (vgl. Römpp Lexikon Lacke und Druckfarben, Georg Thieme Verlag, Stuttgart, New York, 1998, Seite 491: »Reaktiwerdünner«) oder die nachstehend beschriebenen zusätzlichen Bindemittel. Sie enthalten Gruppen, die mindestens eine mit aktinischer Strahlung aktivierbare Bindung aufweisen. Diese wird beim Bestrahlen mit aktinischer Strahlung reaktiv und geht mit anderen aktivierten Bindungen ihrer Art Polymerisationsreaktionen und/oder Vernetzungsreaktionen ein, die nach radikalischen und/oder ionischen Mechanismen ablaufen. Beispiele geeigneter Bindungen sind Kohlenstoff Wasserstoff-Einzelbindungen oder Kohlenstoff-Kohlenstoff-, Kohlenstoff Sauerstoff-, Kohlenstoff-Stickstoff-, Kohlenstoff-Phosphor- oder Kohlenstoff-Silizium-Einzelbindungen oder -Doppelbindungen. Von diesen sind die Kohlenstoff-Kohlenstoff-Doppelbindungen besonders vorteilhaft und werden deshalb erfindungsgemäß ganz besonders bevorzugt verwendet. Der Kürze halber werden sie als "Doppelbindungen" bezeichnet.

Besonders gut geeignete Doppelbindungen sind beispielsweise in (Meth)acrylat-, Ethacrylat-, Crotonat-, Cinnamat-, Vinylether-, Vinylester-, Dicyclopentadienyl-, Norbornenyl-, Isoprenyl-, Isopropenyl-, Allyl- oder Butenylgruppen;

Dicyclopentadienyl-, Norbornenyl-, Isoprenyl-, Isopropenyl-, Allyl- oder Butenylethergruppen oder Dicyclopentadienyl-, Norbornenyl-, Isoprenyl-, Isopropenyl-, Allyl- oder Butenylestergruppen enthalten. Von diesen bieten die Acrylatgruppen ganz besondere Vorteile, weswegen sie besonders bevorzugt verwendet werden.

Die Vernetzung mit aktinischer Strahlung kann noch mit geeigneten Photoinitiatoren als weiteren Zusatzstoffen (vgl. Römpp Lexikon Lacke und Druckfarben, Georg Thieme Verlag, Stuttgart, New York, 1998, Seiten 444 bis 446: »Photoinitiatoren«) initiiert oder beschleunigt werden.

Die Beschichtungsstoffe können Einkomponenten(1K)-Systeme sein.

Im Rahmen der vorliegenden Erfindung ist unter einem Einkomponenten(1K)-System ein thermisch oder thermisch und mit aktinischer Strahlung härtender Beschichtungsstoff zu verstehen, bei dem das Bindemittel und das Vernetzungsmittel nebeneinander, d.h. in einer Komponente, vorliegen. Voraussetzung hierfür ist, daß die beiden Bestandteile erst bei höheren Temperaturen und/oder bei Bestrahlen mit aktinischer Strahlung miteinander vernetzen.

Die Beschichtungsstoffe können des weiteren ein Zweikomponenten(2K)- oder Mehrkomponenten(3K, 4K)-System sein.

Im Rahmen der vorliegenden Erfindung ist hierunter ein Beschichtungsstoff zu verstehen, bei dem insbesondere das Bindemittel und das Vernetzungsmittel getrennt voneinander in mindestens zwei Komponenten vorliegen, die erst kurz vor der Applikation zusammengegeben werden. Diese Form wird dann gewählt, wenn Bindemittel und Vernetzungsmittel bereits bei Raumtemperatur miteinander reagieren, wie etwa die Polyisocyanate mit den Hydroxylgruppen enthaltenden Bindemitteln.

Als Zusatzstoffe für die vorstehend beschriebenen erfindungsgemäßen Beschichtungsstoffe kommen außerdem übliche und bekannte Lackadditive in Betracht.

Beispiele geeigneter Lackadditive sind Pigmente, wie sie in Römpp Lexikon Lacke und Druckfarben, Georg Thieme Verlag, 1998, Seiten 176, »Effektpigmente«; Seiten 380 und 381 »Metalloxid-Glimmer-Pigmente« bis »Metallpigmente«; Seiten 180 und 181, »Eisenblau-Pigmente« bis »Eisenoxidschwarz«; Seiten 451 bis 453, »Pigmente« bis »Pigmentsvolumenkonzentration«; Seite 563, »Thioindigo-Pigmente«; und Seite 567, »Titandioxid-Pigmente«; beschrieben werden. Diese Additive werden verwendet, wenn die erfindungsgemäßen Beschichtungsstoffe als Füller, Unidecklacke oder Wasserbasislacke, insbesondere aber als Wasserbasislacke im Rahmen des sogenannten Naß-in-naß-Verfahrens (vgl. beispielsweise das europäische Patent EP 0 089 497 A 1) zur Herstellung farb- und/oder effektgebender Mehrschichtlackierungen verwendet werden. Sie entfallen naturgemäß, wenn die erfindungsgemäßen Beschichtungsstoffe als Klarlacke, beispielsweise im Rahmen des Naß-in-naß-Verfahrens verwendet werden.

Weitere Beispiele geeigneter Lackadditive, die sowohl in den pigmentierten Lacken als auch in den nicht pigmentierten verwendet werden können, sind zusätzliche Bindemittel wie oligomere und polymere, thermisch und/oder mit aktinischer Strahlung härtbare, lineare und/oder verzweigte und/oder blockartig, kammartig und/oder statistisch aufgebaute (Co)Polymerisate von ethylenisch ungesättigten Monomeren, oder Polyadditionsharze und/oder Polykondensationsharze, wie sie in Römpp Lexikon Lacke und Druckfarben, Georg Thieme Verlag, Stuttgart, New York, 1998, Seite 457: »Polyaddition« und »Polyadditionsharze (Polyaddukte)«, Seiten 463 und 464: »Polykondensate«, »Polykondensation« und »Polykondensationsharze«, sowie Seiten 73 und 74: »Bindemittel«, beschrieben werden. Weitere Beispiele geeigneter zusätzlicher Bindemittel sind die in der Patentschrift DE 197 36 535 A 1 beschriebenen Poly(meth)acrylate oder Acrylatcopolymerisate, Polyester, insbesondere die in den Patentschriften DE 40 09 858 A 1 oder DE 44 37 535 A 1 beschriebenen, Alkyde, acrylierte Polyester, Polylactone, Polycarbonate, Polyether, Epoxidharz-Amin-Addukte, (Meth)Acrylatdiole, partiell verseifte Polyvinylester, Polyurethane und acrylierte Polyurethane, wie die in den Patentschriften EP 0 521 928 A 1,EP0522420 A 1,EP 0 522 419 A 1, EP0730613 A 1 oder DE 44 37 535 A 1 beschriebenen, oder Polyhamstoffe.

Weitere Beispiele geeigneter Lackdditive sind organische und anorganische Füllstoffe, thermisch härtbare Reaktiverdünner, niedrig siedende und/oder hochsiedende organische Lösemittel ("lange Lösemittel"), UV-Absorber, Lichtschutzmittel, Radikalfänger, thermolabile radikalische Initiatoren, wäßrige Dispersionen von Covernetzungsmitteln, Katalysatoren für die Vernetzung, Entlüftungsmittel, Slipadditive, Polymerisationsinhibitoren, Entschäumer, Emulgatoren, Netzmittel, Haftvermittler, Verlaufmittel, filmbildende Hilfsmittel, rheologiesteuernde Additive, Biozide wie Silbersalze oder Flammschutzmittel. Weitere Beispiele geeigneter Lackadditive werden in dem Lehrbuch »Lackadditive« von Johan Bieleman, Wiley-VCH, Weinheim, New York, 1998, beschrieben.

Die vorstehend beschriebenen Vernetzungsmittel und Lackadditive können auch in den erfindungsgemäße erhaltenen Klebstoffen und Dichtungsmassen enthalten sein, sofern sie sich für diese Anwendungszwecke eignen, was der Fachmann anhand seines allgemeinen Fachwissens feststellen kann.

Methodisch weist die Applikation der erfindungsgemäßen Beschichtungsstoffe keine Besonderheiten auf, sondern kann durch alle üblichen Applikationsmethoden, wie z.B. Spritzen, Rakeln, Streichen, Gießen, Tauchen, Träufeln oder Walzen erfolgen. Vorzugsweise werden Spritzapplikationsmethoden angewandt, wie zum Beispiel Druckluftspritzen, Airless-Spritzen, Hochrotation, elektrostatischer Sprühauftrag (ESTA), gegebenenfalls verbunden mit Heißspritzapplikation wie zum Beispiel Hot-Air - Heißspritzen.

Als Substrate kommen alle zu lackierenden Oberflächen, die durch eine Härtung der hierauf befindlichen Lackierungen unter Anwendung von Hitze und/oder von aktinischer Strahlung nicht geschädigt werden, in Betracht; das sind z. B. Metalle, Kunststoffe, Holz, Keramik, Stein, Textil, Faserverbunde, Leder, Glas, Glasfasern, Glas- und Steinwolle, mineral- und harzgebundene Baustoffe, wie Gips- und Zementplatten oder Dachziegel, sowie Verbunde dieser Materialien. Demnach ist der erfindungsgemäße Beschichtungsstoff auch für Anwendungen außerhalb der Automobillackierung geeignet. Hierbei kommt er insbesondere als Bautenanstrichstoff für den Innen- und Außenbereich, die Lackierung von Möbeln und die industrielle Lackierung, inklusive Coil Coating, Container Coating und die Imprägnierung oder Beschichtung elektrotechnischer Bauteile, in Betracht. Im Rahmen der industriellen Lackierungen eignet er sich für die Lackierung praktisch aller Teile für den privaten oder industriellen Gebrauch wie Radiatoren, Haushaltsgeräte, Kleinteile aus Metall wie Schrauben und Muttern, Radkappen, Felgen, Emballagen oder elektrotechnische Bauteile wie Motorwicklungen oder Transformatorwicklungen.

Im Falle elektrisch leitfähiger Substrate können Grundierungen verwendet werden, die in üblicher und bekannter Weise aus Elektrotauchlacken (ETL) hergestellt werden. Hierfür kommen sowohl anodische (ATL) als auch kathodische (KTL) Elektrotauchlacke, insbesondere aber KTL, in Betracht.

Es können auch grundierte oder ungrundierte Kunststoffteile aus z. B. ABS, AMMA, ASA, CA, CAB, EP, UF, CF, MF, MPF, PF, PAN, PA, PE, HDPE, LDPE, LLDPE, UHMWPE, PC, PC/PBT, PC/PA, PET, PMMA, PP, PS, SB, PUR, PVC, RF, SAN, PBT, PPE, POM, PUR-RIM, SMC, BMC, PP-EPDM und UP (Kurzbezeichnungen nach DIN 7728T1) lackiert, geklebt oder abgedichtet werden. Im Falle von nichtfunktionalisierten und/oder unpolaren Substratoberflächen können diese vor der Beschichtung in bekannter Weise einer Vorbehandlung, wie mit einem Plasma oder mit Beflammen, unterzogen oder mit einer Hydrogrundierung versehen werden.

Auch die Härtung der applizierten erfindungsgemäßen Beschichtungsstoffe weist keine methodischen Besonderheiten auf, sondern erfolgt nach den üblichen und bekannten thermischen Methoden wie Erhitzen in einem Umluftofen oder Bestrahlen mit IR-Lampen, die im Falle von Dual Cure noch durch die Bestrahlung mit aktinischer Strahlung ergänzt werden kann. Hierbei können Strahlenquellen wie Quecksilberhoch- oder -niederdruckdampflampen, welche gegebenenfalls mit Blei dotiert sind, um ein Strahlenfenster bis zu 405 nm zu öffnen, oder Elektronenstrahlquellen angewandt werden.

Die resultierenden Beschichtungen, insbesondere die erfmdungsgemäßen ein- oder mehrschichtigen farb- und/oder effektgebenden Lackierungen und Klarlackierungen, sind einfach herzustellen und weisen auch unter extremen klimatischen Bedingungen hervorragende optische Eigenschaften und eine sehr hohe Chemikalien- und Witterungsbeständigkeit auf. Sie sind daher im Innen- und Außenbereich verwendbar.

Die aus den Klebstoffen und Dichtungsmassen hergestellten erfindungsgemäßen Klebschichten und Dichtungen haben auch unter extremen klimatischen Bedingungen eine hervorragende Klebkraft und Dichtungsfähigkeit auch über lange Zeiträume hinweg. Auch sie sind im Innen- und Außenbereich verwendbar.

Daher zeichnen sich auch die grundierten und ungrundierten Substrate, insbesondere Bauten, Karosserien von Automobilen und Nutzfahrzeugen, industrielle Bauteile, inklusive Kunststoffteile, Emballagen, Coils und elektrische Bauteile, oder Möbel, die mit mindestens einer erfindungsgemäßen Beschichtung beschichtet, mit mindestens einer erfindungsgemäßen Dichtung abgedichtet und/oder mit mindestens einem erfindungsgemäßen Klebstoff verklebt sind, durch besondere technische und wirtschaftliche Vorteile, insbesondere eine lange Gebrauchsdauer, aus, was sie für die Anwender besonders attraktiv macht.

**Beispiel**

**Die erfindungsgemäße Herstellung einer Dispersion**

In einem Edelstahlreaktor, ausgerüstet mit Rührer, Rückflußkühler sowie zwei Zulaufgefäßen für die Monomeren und einem Zulaufgefäß für den Initiator wurden 4.843 Gewichtsteile Propylglykol und 1.207 Gewichtsteile Wasser vorgelegt und auf 90°C erhitzt.

Anschließend wurde während drei Stunden eine Lösung aus 1.943 Gewichtsteilen Propylglykol und 916 Gewichtsteilen tert.-Butylperoxy-2-ethylhexanoat gleichmäßig zudosiert.

15 Minuten nach dem Beginn des Initiatorzulaufs wurde mit der Zudosierung der Monomeren begonnen. Der erste Monomerzulauf bestand aus 5.648 Gewichtsteilen Styrol, 2.294 Gewichtsteilen Methylmethacrylat, 1.318 Gewichtsteilen Methacrylester 13 und 1.703 Gewichtsteilen n-Butylmethacrylat. Der zweite Monomerzulauf bestand aus 3.680 Gewichtsteilen Hydroxyethylmethacrylat, 1.540 Gewichtsteilen Acrylsäure und 1.712 Gewichtsteilen Wasser. Beide Monomerzuläufe wurden während 2,5 Stunden gleichmäßig zudosiert. Während der Copolymerisation wurde die Temperatur beim 90°C gehalten. Nach dem Ende der Zuläufe ließ man zwei Stunden nachpolymerisieren.

Die resultierende Acrylatlösung wies einen theoretischen Festkörpergehalt von 63,8 Gew.% auf. Das hierin enthaltene Copolymerisat hatte eine theoretische Säurezahl von 70 mg KOH/g, ein zahlenmittleres Molekulargewicht von 6.802 Dalton und ein gewichtsmittleres Molekulargewicht von 14.248 Dalton.

Die Acrylatlösung wurde mit 1.523 Gewichtsteilen Dimethylethanolamin während 45 Minuten bei 80°C neutralisiert. 30 Minuten nach dem Ende der Neutralisation wurde die Lösung während 2,5 Stunden mit 47.865 Gewichtsteilen Wasser über ein Zulaufgefäß versetzt, wobei die Temperatur langsam auf 70°C gesenkt wurde. Anschließend wurde die Dispersion während einer Stunde homogenisiert. Ihr theoretischer Festkörpergehalt betrug 24,5 Gew.-%.

Für die zweite Stufe der Copolymerisation und/oder Pfropfmischpolymerisation wurde zu der Dispersaion während 3,5 Stunden über ein Zulaufgefäß eine Mischung aus 1.147 Gewichtsteilen tert.-Butylperoxy-2-ethylhexanoat und 2.431 Gewichtsteilen Propylglykol gleichmäßig zudosiert. 15 Minuten nach dem Beginn des Initiatorzulaufs wurde mit der Zudosierung einer Mischung aus 8.140 Gewichtsteilen Styrol, 1.618 Gewichtsteilen Methylmethacrylat, 152 Gewichtsteilen Glycidylmethacrylat, 3.654 Gewichtsteilen n-Butylmethacrylat und 6.666 Gewichtsteilen Hydroxyethylmethacrylat begonnen; der Zulauf wurde während 3,5 Stunden gleichmäßig zudosiert. Die Polymerisationstemperatur lag bei 80 °C. Nach Beendigung der Zuläufe wurde noch zwei Stunden nachpolymerisiert.

Die erfindungsgemäß resultierende Dispersion wies einen theoretischen Festkörpergehalt von 40 Gew.-%, eine theoretische Säurezahl von 30 mg KOH/g, eine theoretische Hydroxylzahl von 112 mg KOH/g, einen pH-Wert von 8,3, einen Lösemittelgehalt von 9,2 Gew.-%, einen Wassergehalt von 50,8 Gew.-% und eine Viskosität von 1,6 dPas auf. Das hierin enthaltene Copolymerisat und/oder Pfropfmischpolymerisat wies ein zahlenmittleres Molekulargewicht von 9.220 Dalton und ein massenmittleres Molekulargewicht von 92.703 Dalton auf (Mw/Mn = 10,06).

Die erfindungsgemäß resultierende Dispersion war hervorragend für die Herstellung von Beschichtungsstoffen, Klebstoffen und Dichtungsmassen, insbesondere aber für die Herstellung von wäßrigen Füllern, Unidecklacken, Wasserbasislacken und Klarlacken geeignet.

## Patentansprüche

1. Verfahren zur Herstellung wäßriger (Meth)Acrylatcopolymerisat-Dispersionen, bei dem man

   (I) mindestens ein Monomer (a), das mindestens eine hydrophile funktionelle Gruppe enthält, die die Wasserlöslichkeit oder -dispergierbarkeit des (Meth)Acrylatcopolymerisats bewirkt, in wässrig/organischer Lösung unter Verwendung mindestens eines öllöslichen, freie Radikale liefernden Initiators (co)polymerisiert,
   (II) das resultierende (Co)Polymerisat I gegebenenfalls partiell oder vollständig neutralisiert,
   (III) die resultierende Lösung des gegebenenfalls (partiell) neutralisierten (Co) Polymerisats I in Wasser dispergiert und
   (IV) in Gegenwart der resultierenden Dispersion III mindestens ein Monomer (b) unter Verwendung öllöslicher, freie Radikale liefernder Initiatoren copolymerisiert und/oder pfropfmischpolymerisiert, wobei das Monomer oder die Monomeren (b)

      - mindestens eine Hydroxyl-, Amid-, Carbamat-, Epoxid- und/oder Ureidogruppe, oder mindestens eine hydrophobe Gruppe enthält oder enthalten und
      - nach Art und Menge so ausgewählt wird oder werden, daß das resultierende (Meth)Acrylatcopolymerisat in Wasser löslich oder dispergierbar ist.

2. Verfahren nach Anspruch 1, **dadurch gekennzeichnet, daß** die darin vorliegenden (Meth)Acrylatcopolymerisate Copolymerisate und/oder Pfropfmischpolymerisate sind.

3. Verfahren nach Anspruch 1 oder 2, **dadurch gekennzeichnet, daß** im Verfahrensschritt I mindestens ein Monomer (a) und mindestens ein Monomer (b) copolymerisiert werden.

4. Verfahren nach Anspruch 3, **dadurch gekennzeichnet, daß** im Verfahrensschritt I das Monomer oder die Monomeren (a) einerseits und das Monomerer oder die Monomeren (b) andererseits über getrennte Zuläufe zu der wässrig/organischen Lösung (Vorlage) zudosiert werden.

## Claims

1. Process for preparing aqueous (meth)acrylate copolymer dispersions by

   (I) subjecting at least one monomer (a) containing at least one hydrophilic functional group which brings about the water-solubility or water-dispersibility of the (meth)acrylate copolymer to (co)polymerization in aqueous/ organic solution using at least one oil-soluble initiator which provides free radicals,
   (II) where appropriate, fully or partly neutralizing the resulting (co)polymer I,

(III) dispersing the resultant solution of the (co)polymer I, (partly) neutralized where appropriate, in water, and
(IV) copolymerizing and/or graft-copolymerizing at least one monomer (b) in the presence of the resultant dispersion III using oil-soluble initiators which provide free radicals, the monomer or monomers (b)

- containing at least one hydroxyl, amide, carbamate, epoxide and/or ureido group, or at least one hydrophobic group, and
- being selected in nature and amount such that the resulting (meth)acrylate copolymer is soluble or dispersible in water.

2. Method according to Claim 1, **characterized in that** the (meth)acrylate copolymers present therein are copolymers and/or graft copolymers.

3. Method according to Claim 1 or 2, **characterized in that** in process step I at least one monomer (a) and at least one monomer (b) are copolymerized.

4. Method according to Claim 3, **characterized in that** in process step I the monomer or the monomers (a) on the one hand and the monomer or the monomers (b) on the other hand are metered into the aqueous/organic solution (initial charge) by way of separate feeds.

**Revendications**

1. Procédé de préparation de dispersions aqueuses de copolymères de (méth)acrylate, dans lequel

(I) on (co)polymérise au moins un monomère (a), qui contient au moins un groupe fonctionnel hydrophile, qui confère la solubilité ou la dispersibilité dans l'eau du copolymère de (méth)acrylate, dans une solution aqueuse / organique en utilisant au moins un initiateur oléosoluble fournissant des radicaux libres,
(II) on neutralise le (co)polymère I résultant, le cas échéant partiellement ou complètement,
(III) on disperse dans de l'eau la solution résultante du (co)polymère I le cas échéant (partiellement) neutralisé, et
(IV) en présence de la dispersion résultante III, on copolymérise et / ou on copolymérise par greffage au moins un monomère (b) en utilisant des initiateurs oléosolubles fournissant des radicaux libres, le monomère ou les monomères (b)

- contenant au moins un groupe hydroxyle, amide, carbamate, époxyde et / ou uréido ou au moins un groupe hydrophobe et
- étant choisi(s), quant au type et à la quantité, de manière que le copolymère de (méth)acrylate résultant soit soluble ou dispersible dans l'eau.

2. Procédé selon la revendication 1, **caractérisé en ce que** les copolymères de (méth)acrylate présents sont des copolymères et / ou des copolymères greffés.

3. Procédé selon la revendication 1 ou 2, **caractérisé en ce que**, dans l'étape I du procédé, on copolymérise au moins un monomère (a) et au moins un monomère (b).

4. Procédé selon la revendication 3, **caractérisé en ce que**, dans l'étape I du procédé, le monomère ou les monomères (a) d'une part et le monomère ou les monomères (b) d'autre part sont ajoutés à la solution aqueuse / organique (charge) via des amenées séparées.